# EUROPEAN PATENT SPECIFICATION

(11) **EP 2 725 919 B1**
(45) Date of publication and mention of the grant of the patent: **15.04.2015**
(21) Application number: 12745556.6
(22) Date of filing: 28.06.2012
(51) Int. Cl.: A23F 5/16, A23F 5/24

(54) **METHOD FOR REDUCING THE CONTENT OF ACRYLAMIDE IN A ROASTED COFFEE**
VERFAHREN ZUR VERRINGERUNG DES ACRYLAMIDGEHALTS IN GERÖSTETEM KAFFEE
PROCÉDÉ POUR RÉDUIRE LA TENEUR EN ACRYLAMIDE DANS UN CAFÉ TORRÉFIÉ

(30) Priority: 01.07.2011 IT MO20110164
(43) Date of publication of application: 07.05.2014
(73) Proprietor: Illycaffè S.p.A., 34147 Trieste (TS) (IT)
(72) Inventor: NAVARINI, Luciano, I-34127 Trieste (TS) (IT); DEL TERRA, Lorenzo, I-34137 Trieste (TS) (IT); COLOMBAN, Silvia, I-34124 Trieste (TS) (IT); LONZARICH, Valentina, I-34144 Trieste (TS) (IT); SUGGI LIVERANI, Furio, I-34123 Trieste (TS) (IT)
(74) Representative: Crugnola, Pietro
(86) International application number: PCT/IB2012/053286
(87) International publication number: WO 2013/005145

(56) References cited:
- WO-A1-2006/128843
- WO-A1-2007/077546
- WO-A1-2008/135556
- WO-A2-2004/037007
- US-A1- 2004 101 607
- ZYZAK D V ET AL: "Acrylamide formation mechanism in heated foods", JOURNAL OF AGRICULTURAL AND FOOD CHEMISTRY, AMERICAN CHEMICAL SOCIETY, US, vol. 51, no. 16, 28 June 2003 (2003-06-28) , pages 4782-4787, XP002276619, ISSN: 0021-8561, DOI: 10.1021/JF034180I
- YAYLAYAN VAROUJAN A ET AL: "Mechanistic pathways of formation of acrylamide from different amino acids", ADVANCES IN EXPERIMENTAL MEDICINE AND BIOLOGY, SPRINGER, US, vol. 561, 31 March 2004 (2004-03-31), pages 191-203, XP009155873, ISSN: 0065-2598 ISBN: 978-0-387-69078-0
- MURKOVIC M ET AL: "Analysis of amino acids and carbohydrates in green coffee", JOURNAL OF BIOCHEMICAL AND BIOPHYSICAL METHODS, AMSTERDAM, NL, vol. 69, no. 1-2, 30 November 2006 (2006-11-30), pages 25-32, XP024996793, ISSN: 0165-022X, DOI: 10.1016/J.JBBM.2006.02.001 [retrieved on 2006-11-30] cited in the application
- ARNOLD U ET AL: "Analysis of free amino acids in green coffee beans. II. Changes of the amino acid content in arabica coffees in connection with post-harvest model treatment.", ZEITSCHRIFT FÜR LEBENSMITTEL-UNTERSUCHUNG UND -FORSCHUNG OCT 1996 LNKD- PUBMED:9123976, vol. 203, no. 4, October 1996 (1996-10), pages 379-384, XP002668311, ISSN: 0044-3026

## Description

The invention relates to a method for reducing the content of acrylamide in a roasted coffee.

Acrylamide (2-propenamide) is the amide of acrylic acid and the formation thereof in food products that are rich in starch or are subjected to thermal treatments at high temperatures was identified and reported for the first time in April 2002 by the researchers of the Swedish National Food Agency (SNFA) and the University of Stockholm. Since then, similar reports have come from many other Countries, among which United Kingdom, Norway and the USA (FAO/WHO "Discussion paper on acrylamide", Session 36, Rotterdam (NL), 22-26 March 2004) .

Acrylamide can produce mutagenic, cancerogenic and neurotoxic effects. The mutagenic action of this compound has been demonstrated - *in* vitro and *in vivo -* in mammalian cells, both somatic and germ cells, and it has also been demonstrated that acrylamide can produce transmissible mutations. Acrylamide is cancerogenic in animals, because it produces an increase in the incidence of a certain number of benign and malignant tumours in various organs (for example thyroid, adrenal glands and gonads), but it cannot be excluded a *priori* that the cancerogenic action can also reveal itself in humans. The neurotoxic effects, which are essentially represented by peripheral neuropathologies (structural and functional lesions of the peripheral nervous system), have been identified both at experimental level, in animals, and at clinical level, in humans ("European Union Risk Assessment Report - Acrylamide", 2002, EUR 19835 EN, 24, pp. 1-207, Office for Official Publications of the European Communities, Luxembourg).

Although the food products in which it is possible to trace acrylamide most frequently are potato-based and cereal-based foods, nevertheless acrylamide is also present in roasted coffee. In particular, the European Food Safety Authority (EFSA) considered the following food products to be at risk and consequently monitored (through sampling and analysis) them from 2007 to 2009: "French fries" (stick-shaped fried potatoes), "Potato crisps" (fried potatoes shaped as thin and crispy slices), potato-based products for home cooking use, bread, breakfast cereals, biscuits, cereal-containing baby foods, roasted coffee ("Results on Acrylamide levels in food from monitoring years 2007-2009 and exposure assessment", EFSA Journal, 2011; 9(4):2133).

From a quantitative point of view, in the food products that are most at risk acrylamide has been detected in extremely variable concentrations (expressed in *µ*g/kg = ppb). For example, in the "French fries"-type fried potatoes average concentrations of acrylamide have been detected that oscillated between 450 and 1200 ppb, whereas in biscuits and crackers an average concentration of acrylamide equal to 410 ppb has been detected (Keramat J. et al.: "Acrylamide in foods: Chemistry and Analysis. A Review" Food and Bioprocess Technology, 2010, Vol. 4, No. 3, pp. 340-363, Springer). In roasted coffee, concentrations of acrylamide comprised between 45 and 374 ppb have been detected (Andrzejewski D. et al. "Analysis of Coffee for the Presence of Acrylamide by LC-MS/MS", Journal of Agricultural and Food Chemistry, Vol. 52, No. 7, 2004, pp. 1996-2002).

Various mechanisms have been proposed for explaining the formation of acrylamide in the above-mentioned food products that are still object of scientific investigation. Principally, acrylamide forms through the Maillard reaction, which actually is a complex system of reactions that occur in various foods during cooking. Schematically, the Maillard reaction comprises a condensation process between an amino acid and a reducing carbohydrate (fructose, glucose). The involved amino acid is asparagine, whereas, as an alternative to the reducing sugars, compounds can intervene that contain reactive carbonyl (such as α-dicarbonyls, n-aldehydes, 2-oxyacids). By condensation of the asparagine with the reducing carbohydrate, or with the reactive carbonyl, an imine or Schiff base forms, which is decarboxylated. The decarboxylated Schiff base can alternatively decompose into acrylamide and imine, or originate by hydrolysis 3-amino propionamide (3-APA), which, by subsequent deamination, can form acrylamide (Friedman M. et al: "Review of Methods for the Reduction of Dietary Content and Toxicity of Acrylamide", Journal of Agricultural and Food Chemistry, Vol. 56, No. 15, 2008, pp. 6113-6140). In addition to the asparagine/carbohydrate or asparagine/reactive carbonyl condensations, alternative ways of formation of acrylamide have been hypothesized (Keramat J. et al., quoted above). For example, by oxidizing degradation of lipids (monoglycerides, triglycerides) acrolein (acrylic acid aldehyde) can form, which can be oxidised to acrylic acid: the latter, by reacting with ammonia, forms acrylamide. The 3-APA, which forms acrylamide by deamination, can be produced by a reaction between asparagine and pyruvic acid (besides by hydrolysis of the above-mentioned Schiff base). By dehydration of the serine amino acid and desulphurisation of the cysteine amino acid pyruvic acid is produced, which can be reduced to lactic acid: the latter is in turn dehydrated to acrylic acid, which, by reacting with ammonia, forms acrylamide. Aspartic acid, ß-alanine and carnosine (a dipeptide consisting of ß-alanine and histidine) are thermally decomposed to acrylic acid, which, in the presence of ammonia, forms acrylamide. Further, the aspartic acid can produce acrylic acid through combined decarboxylation and deamination processes (Yayalyan V.A. et al. "Acrilammide formation in food: A mechanistic perspective" Journal of the AOAC International, 2005, Jan-Feb; 88(1):262-7).

From what has been set forth above, it is clear that the formation of acrylamide during the thermal treatments undergone by various foods, and in particular during roasting of the green coffee, is a chemically complex, quantitatively not negligible, phenomenon and with effects for the health of consumers that cannot be underestimated.

Consequently, certain methods have been proposed for reducing the concentration of acrylamide in roasted coffee.

A steam treatment of coffee beans during roasting has been evaluated experimentally (Theurillat V. et al. "Impact of Roasting Conditions on Acrylamide Formation in Coffee" ASIC 21st International Conference, 11-15 September 2006, Montpellier, France). The green coffee was roasted in a roasting apparatus equipped with steam injection, at a temperature of 200-240°C, with a value of a_{w} (water activity) comprised between 0.04 and 0.16. Roasting time was selected so as to obtain a CTN ("Colour Test Neuhaus", reflectance colorimetric unit that is used to determine the final roasting point) value equal to 90. The so produced roasted coffee has been analysed to assess the contents thereof in acrylamide, and the analytical results have been compared with those obtained from coffee that has been roasted in a conventional manner (i.e. without steam injection).

In addition to carry out the quantitative determination of acrylamide in the coffee that was roasted by steam injection and in the conventionally roasted coffee, samples of coffee beverage that was extracted from coffee that was roasted by steam injection and samples of coffee beverage that was extracted from conventionally roasted coffee were subjected to sensory analysis.

The results of the above-mentioned comparative quantitative determination have shown that the samples of coffee that was roasted by steam injection contained less acrylamide than the samples of conventionally roasted coffee. This is because, to reach an analogous CTN value, the roasting by steam injection requires a longer roasting time than the conventional roasting and, because of the prolonged heat treatment, the acrylamide content in the roasted coffee is reduced. In fact, although the formation of acrylamide is actually induced by the heat treatment, the acrylamide formation reactions prevail at the beginning of the roasting cycle, whereas phenomena of (physical and chemical) degradation of acrylamide tend to prevail proceeding towards the end of the cycle.

Nevertheless, the results of the comparative sensory analysis have shown that the method disclosed above has a significant drawback, consisting of an undesired alteration of the organoleptic properties of the coffee that is roasted by steam injection, an alteration that is due to the aforesaid prolongation of roasting time.

Therefore, if from a merely chemical point of view roasting the coffee by steam injection could perhaps contribute to solving the problem of acrylamide, nevertheless from an organoleptic point of view the properties of coffee that is roasted by steam injection are not satisfactory, with clear negative effects for the marketing of the product. WO2004/037007 discloses a method for reducing the acrylamide content in the roasted coffee. The method provides for enzymatically degrading a precursor of acrylamide, namely asparagine, by using a water solution containing a specific enzyme (asparaginase). After thus reducing the asparagine content in the green coffee, the latter is roasted and, given the quantitative reduction of the precursor, a minimal quantity of acrylamide will form during roasting. Preliminarily to the aforesaid enzyme treatment, WO2004/037007 provides for subjecting the green coffee beans to various treatments, comprising:
- reduction into fragments (milling, grinding) of the coffee beans, so as to increase the contact surface between the green coffee and the enzyme;
- exposure of the coffee beans to the action of cellulase, hemicellulase and/or pectinase, for degrading the cellulose and thus the structure of the beans;
- drying the coffee beans, or treating the coffee beans with low pressure or atmospheric pressure steam, so as to open the pores of the beans and facilitate the penetration inside the beans of the water solution containing the enzyme.

A significant drawback of the method disclosed in WO2004/037007 consists of the complexity of the various preliminary treatments that the beans of green coffee have to undergo, and which appear substantially indispensable for obtaining an effective interaction between the enzyme in solution and the asparagine contained in the green coffee beans. The multiplicity of the pretreatments provided by the method disclosed in WO2004/037007 make the latter particularly complicated to implement and substantially uneconomic.

One object of the invention is to improve the methods for reducing the acrylamide content in roasted coffee.

Another object is to provide a method for reducing the acrylamide content in the roasted coffee without altering the organoleptic properties of the latter.

A further object is to provide a method for reducing the acrylamide content in roasted coffee that does not require complex physical and/or chemical pretreatments of the coffee beans, so as not to cause excessive expenditure of time and/or money.

According to the invention, a method is provided for reducing the acrylamide content in the roasted coffee, as defined in claim 1.

The method according to the invention is based on a series of experimental evidences, which are surprisingly unexpected and constitute the result of a series of researches that were conducted by Illycaffè S.p.A. on water extracts obtained from green coffee beans, i.e. unroasted coffee, during a decaffeinating procedure.

First of all it was found that, in the aforesaid water extract, asparagine and aspartic acid are present in concentrations (expressed in *µ*g/g = ppm) that are almost equal or however very near on average. This experimental evidence contradicts the known scientific literature (Murkovic M. et al. "Analysis of amino acids and carbohydrates in green coffee" Journal of Biochemical and Biophysical Methods, 69, 2006, pp. 25-32), according to which the aspartic acid would be present in the green coffee in a maximum concentration below 200 *µ*g/g, whilst the asparagine would reach a maximum concentration of 960 *µ*g/g. Consequently the aspartic acid, although being cited among the precursors of acrylamide, was considerable as a less important factor - than asparagine - in the formation of acrylamide during roasting of green coffee. As, on the contrary, the aspartic acid is present in the green coffee in a not negligible concentration compared with asparagine, the importance of the aspartic acid in the formation of acrylamide during roasting would be at least comparable to that of asparagine. To this it must be added that the enzyme degradation of asparagine by asparaginase (as disclosed in WO2004/037007) originates aspartic acid, which is added to the aspartic acid that is already naturally present in the green coffee.

It has also been found that that the enzymes that are suitable for selectively degrading asparagine and aspartic acid (asparaginase; aspartase) are able to act effectively in the above-mentioned water extract - despite the simultaneous presence of caffeine and other chemical components of the green coffee - and that the water extract, after the enzymatic treatment by asparaginase and aspartase, can be reincorporated into the green coffee. The possibility of reincorporating into the beans the chemical components of the coffee, and thus also the substances that are responsible for the aromatic profile of the coffee, causes that the method according to the invention enables the organoleptic properties in the roasted coffee and in the coffee beverage extracted therefrom to be maintained unaltered.

The aspartic acid contained in the water extract (both originally present in the green coffee, and produced by enzyme degradation of the asparagine) is degraded enzymatically by aspartase, with consequent production of fumaric acid. The latter, which is included among the chemical components of coffee (Maier H.G. "The acids of coffee", 1987, ASIC, 12e Colloque Scientifique International sur le Café, Montreux), does not alter the organoleptic properties of the finished product and is not involved in the processes of formation of acrylamide. In particular, fumaric acid is produced if an aspartate ammonia-lyase (E.C. number 4.3.1.1.) is used as enzyme having aspartase activity.

It is nevertheless possible to use - alternatively to and/or jointly with the aforesaid enzyme - also other known enzymes having the capacity to convert the aspartic acid into molecules that are not precursors of acrylamide.

In this manner, it is possible to obtain a green coffee having a reduced content of two important precursors of acrylamide, i.e. asparagine and aspartic acid. This green coffee can thus be roasted, using known roasting methods, and the roasted coffee thus obtained has reduced concentration values of acrylamide.

It should be emphasised that, unlike known methods, the method according to the invention does not involve elaborate chemical and physical pretreatments of the coffee beans, as provided in WO2004/037007, as it is sufficient to obtain a water phase extract from the green coffee beans. The extract can be obtained by following a known procedure (disclosed in CA1203111) that is used for decaffeinating the green coffee. The method according to the invention thus enables a roasted coffee to be produced that has a reduced acrylamide content, without requiring excessive expenditure of time and/or money. Unlike what has been disclosed in the scientific literature (Theurillat V. et al., quoted above), it is possible to use conventional roasting methods and, in particular, roasting times that are not excessively prolonged. Therefore, the method according to the invention enables a roasted coffee to be obtained that has a reduced acrylamide content, in which the desired organoleptic properties remain unaltered and can be appreciated by the consumer. The preservation of unaltered organoleptic properties in the roasted coffee is further due to the fact that the enzymatic treatment is carried out on the water extract, which is subsequently reincorporated into the green coffee beans, without loss of the solutes contained in the latter.

By way of non-limiting example, an industrial procedure is disclosed below that is based on the method according to the invention and enables a roasted coffee to be produced that has a reduced acrylamide content.

### Example 1 - Production of roasted coffee with reduced acrylamide content

A quantity of beans of green coffee (*Coffea arabica*) equal to 1.2 kg is placed in an extraction apparatus of known type having a capacity of 10 litres. After inserting into the extracting apparatus a volume of extraction liquid, namely water, equal to 7.5 litres, the coffee beans are subjected to extraction (in water) at a temperature equal to 80°C and for a time equal to 5 h.

This extraction step can be conducted for a time less than or greater than 5 h, in particular comprised between 3 h and 12 h.

Further, during the extraction step the temperature can be less or greater than 80°C and, in particular, it can be comprised between 50°C and 90°C.

For the entire duration of the extraction step, the system is maintained under constant agitation and the formed steam is condensed by reflux into the extractor.

At the end of the extraction step, a water extract and an extracted green coffee are obtained and separated. By "extracted green coffee" or "extracted unroasted coffee" a green (unroasted) coffee is thus meant the beans of which have been subjected to extraction.

The water extract, containing asparagine and aspartic acid, has a volume that is equal to about 6 litres and pH equal to about 5.0-5.5. The water extract is cooled and maintained at 37°C in a container having a suitable capacity and placed in a thermostatic stirrer, in which it is mixed with a solution (0.30 ml) containing at least one enzyme that is suitable for degrading the asparagine, namely an asparaginase, and at least one enzyme that is suitable for degrading the aspartic acid, namely an aspartase.

As an asparaginase, an enzymatic preparation of asparaginase that is obtained from *Escherichia coli* (SIGMA, No. A3809, 100 units), or an enzymatic preparation of asparaginase that is obtained from *Aspergillus niger* (SPRIN Technologies, Cod. SBNAN), can be used.

As an aspartase, an enzymatic preparation of aspartase can be used that is obtained from *Escherichia coli* (SPRIN Technologies, Cod. SBANN).

The quantity - namely, the number of units - of asparaginase and aspartase to be used in the enzymatic treatment is variable according to the reaction conditions.

In fact, the process can be optimised by letting large quantities of the aforesaid enzymes act for a reduced reaction time, or by letting reduced quantities of the enzymes act for a prolonged reaction time.

Consequently, also the reaction time is variable and is so selected as to enable the completion of the reaction compatibly with the quantity of enzyme used. For example, the reaction time can be comprised between 10 minutes and 120 minutes and, in particular, be equal to 30 minutes.

Also the reaction temperature can vary on the basis of the properties of the enzymes used and can therefore be greater or less than 37°C. In particular, the reaction temperature can be comprised between 25°C and 60°C.

In order to perform the enzymatic treatment, in addition to the above-mentioned asparaginase and aspartase-based enzymatic preparations it is clearly possible to use (modifying, if necessary, the reaction environment and/or conditions according to modalities that are clear for a person skilled in the art) any other (industrially applicable) source of asparaginase or aspartase activity.

The aforesaid sources of asparaginase or aspartase activity can be selected from a group consisting of: enzymes in solution, immobilised enzymes (biological catalysts in heterogeneous phase), unpurified bacterial lysates, immobilised bacteria.

In addition to using the aforesaid sources of aspartase activity, it is possible to chemically degrade the aspartic acid by using known non-enzymatic chemical procedures.

It is also possible to separate the enzymatic treatment with asparaginase from the enzymatic treatment with aspartase, by mixing the water extract sequentially with two distinct solutions, one containing the asparaginase and the other containing the aspartase, selecting suitable reaction times and temperatures as disclosed previously.

Therefore, it is possible to add the asparaginase to the water extract and - after a time has elapsed sufficient to enable the completion of the reaction - add the aspartase to the water extract and wait for the completion of this second reaction.

Alternatively, the treatment with aspartase can precede the one with asparaginase.

At the end of the enzymatic treatment, the water extract is concentrated under vacuum through rotating evaporator, at a temperature of 50°C, until a volume equal to 1 litre is obtained.

This concentration step can be conducted at a temperature lesser or greater than 50°C, in particular between 40°C and 65°C.

In the concentration step other known procedures can also be used, such as, for example: evaporation under atmospheric pressure, pervaporation, concentration by freezing (freeze-concentration), reverse osmosis and nanofiltration.

Parallel to the enzymatic treatment and the subsequent concentration of the water extract, the extracted green coffee is partially dried at a temperature of 80°C, until it reaches humidity comprised between 10% in weight and 30% in weight and, in particular, comprised between 20% in weight and 25% in weight.

When the extracted green coffee has reached the desired content of humidity, for example comprised between 20% in weight and 25% in weight, the concentrated water extract is reincorporated into the green coffee, so as to obtain a reincorporated green coffee.

By "reincorporated green coffee", or "reincorporated non roasted coffee", a green (unroasted) coffee is thus meant into the beans of which the concentrated water extract has been reincorporated, namely a green (unroasted) coffee that has recovered the substances (coffee components) that have been extracted during the extraction step.

This is obtained by placing the extracted green coffee into a suitable container, adding the concentrated water extract and mixing at ambient temperature for a time equal to 1 h.

A wet reincorporated green coffee is so obtained, with low asparagine and aspartic acid content, which is again dried at a temperature of 80°C, until it reaches a residual humidity comprised between 8% in weight and 12.5% in weight, and in particular equal to 10% in weight.

In this manner, a dry reincorporated green coffee is obtained, which has a low asparagine and aspartic acid content and is ready to be roasted by using known roasting methods.

The so produced roasted coffee has a reduced acrylamide content: in particular, in the aforesaid roasted coffee the reduction of acrylamide is greater than 80%.

In order to carry out a quality control of the procedure disclosed above, it is possible to sample the enzymatically treated water extract and/or the roasted coffee and subject the taken samples to analysis.

In particular, the samples of enzymatically treated water extract can be analysed through known methods, such as, for example, GC-MS (gas chromatography - mass spectrometry), in order to check the residual concentration of asparagine and aspartic acid.

The samples of roasted coffee can be ground and the so obtained roasted coffee powder can be analysed through known methods, such as, for example LC-ESI-MS-MS (liquid chromatography - electrospray ionisation - tandem mass spectrometry), in order to check the concentration of acrylamide and control the residual concentration of acrylamide.

It should be noted that the values of numerous parameters indicated in the Example 1 (quantity of used raw material, volume of water used for the extraction, capacity of the extraction apparatus, duration of the extraction step, etc) are merely by way of example and can therefore be suitably modified by a person skilled in the art on the basis of the quantity and/or the organoleptic properties of the finished product (roasted coffee) that it is desired to obtain. Moreover, it should be noted that the roasted coffee produced through the industrial procedure disclosed in the Example 1 is a coffee containing caffeine, because in the reincorporating step all the components of the coffee are recovered.

It is however possible to modify the aforesaid procedure by putting a decaffeination step before the enzymatic treatment step.

The decaffeination step can be carried out through the procedure disclosed in CA1203111, namely by causing the water extract to pass, by means of a pump and a filter, alternatively through the extractor and through adsorption columns containing active carbon or adsorption resins of known type. In this manner, the water extract is deprived of caffeine before to be treated enzymatically.

In order to increase the selectivity of the active carbon for the caffeine, it is possible to preload (by adsorption) the active carbon with one or more substances that are present in the coffee water extract, as disclosed, for example, in US5208056. In this manner a chemical equilibrium can be created between the aforesaid substance, as present in the coffee water extract, and the same substance adsorbed to the active carbon. Consequently, the active carbon is induced to adsorb larger quantities of caffeine. For example, the active carbon can be preloaded with water solutions containing sugars (Heilmann W. "A modified Secoffex process for green bean decaffeination" 1991, 14e Colloque Scientifique International sur le Café, San Francisco; US5208056) and acids (US5208056). The sugars can comprise saccharose and/or glucose, whilst the acids can comprise acetic acid, hydrochloric acid, formic acid (US5208056).

The decaffeination step can also be carried out by other known methods, provided that these methods use the water as an extraction solvent of the caffeine and are thus definable "water decaffeination" methods.

The decaffeination step can also be carried out after the enzymatic treatment, by causing the enzymatically treated water extract to pass through the adsorption columns.

As a further alternative, the decaffeination step can be carried out during the enzymatic treatment, for example by immobilising the enzymes inside the absorption columns, that is to say on the active carbon or on the adsorption resins. Moreover, being it possible to separate the enzymatic treatment with asparaginase from the enzymatic treatment with aspartase, it is consequently possible to interpose the decaffeination step between the two distinct enzymatic treatments.

It is thus possible to treat the water extract with the asparaginase, to cause the enzymatically treated water extract to pass through the adsorption columns and subsequently to treat the decaffeinated water extract with aspartase.

Alternatively, it is possible to treat the water extract with the aspartase, to cause the enzymatically treated water extract to pass through the adsorption columns and subsequently to treat the decaffeinated water extract with asparaginase.

For the purpose of decaffeinating, the extraction with water shall have to be prolonged beyond the 5 h mentioned in the Example 1 and the total duration of the extraction step can be established according to a criterion that is well known to the persons skilled in the art, namely on the basis of the residual caffeine content to be achieved.

Some of the analytical and experimental procedures, which were used in the above-mentioned researches conducted by Illycaffè S.p.A. on water extracts of green coffee, are disclosed below by way of example.

### Example 2 - Extraction of amino acid precursors of acrylamide

30 g of grains of green coffee (*Coffea arabica*) have been placed in contact with 180 ml of water in a lined three-neck container. The container has been maintained at a temperature of 80°C through thermostat and under constant agitation through magnetic stirrer. The extraction has been conducted for 5 hours, whilst the steam that had formed was condensed by reflux into the container.

After the 5 hours had elapsed, the water extract, having a pH equal to 5.5, has been recovered and subjected to a quali-quantitative determination of the amino acid precursors of acrylamide. Purified and derivatized samples have been obtained from the extract by means of a kit called *"EZ:faast™* - Free *(Physiological) Amino acid Analysis"* (Phenomenex Inc. USA, No. KG0-7166), and the samples have been analysed in GC-MS. For the instrumental analysis, a *"ZB-AAA 10m x 0.25 mm Amino Acid Analysis GC Column"* gas chromatographic column (included in the kit) and a gas chromatograph/mass spectrometer system of Agilent Technologies USA have been used.

The analysis disclosed above has been carried out on a plurality of samples of C. *arabica,* having a different geographical origin. The analytical results are set out in the following Table A:

**Table A**

| Sample | Asparagine (*µ*g/g) | Aspartic acid (*µ*g/g) |
|---|---|---|
| Blend | 549 | 453 |
| Brazil/batch 1 | 482 | 867 |
| Brazil/batch 2 | 471 | 504 |
| Ethiopia | 491 | 497 |
| Kenya | 556 | 334 |
| India | 953 | 898 |

On the basis of the analytical results set out in Table A, the average of the concentration values of asparagine is equal to about 584 *µ*g/g and the average of the concentration values of aspartic acid is equal to about 592 *µ*g/g.

### Example 3 - Quantity of acrylamide in roasted coffees with different amino acid composition of the starting green coffee

A commercial batch of green coffee (*C. arabica*) coming from Guatemala and a commercial batch of green coffee (*C. arabica*) of the *laurina* variety coming from Guatemala have been roasted in an industrial plant in order to obtain in both cases a medium roasting grade (total weight loss 15.0-16.0 %). On the starting samples of green coffee the asparagine and aspartic acid content has been determined according to the procedure disclosed in the Example 2. The roasted coffees have been subjected to analysis for verifying the acrylamide concentration. For each roasted coffee 1 g of coffee powder (ground roasted coffee) has been subjected to extraction, according to a known extraction method (Hoenicke K. et al. "Analysis of acrylamide in different foodstuffs using liquid chromatography - tandem mass spectrometry and gas chromatography - tandem mass spectrometry", Analytica Chimica Acta, Vol. 520, 2004, pp. 207-215*).* The corresponding extract has been subjected to LC-ESI-MS-MS, by using a *"LiChrospher 100 CN"* column for liquid chromatography (Merck, Germany). The analytical results obtained are set out in the following Table B:

**Table B**

| Sample | Asparagine (*µ*g/g) | Aspartic acid (*µ*g/g) | Acrylamide (*µ*g/kg) |
|---|---|---|---|
| Guatemala | 571 | 577 | 120 |
| Guatemala var. *laurina* | 490 | 187 | 88 |

The results of Table B attest that a significantly lower acrylamide content in the roasted coffee corresponds to a lower aspartic acid content in the starting green coffee. This experimental evidence confirms the importance of aspartic acid as a precursor of acrylamide and enables to state that, by reducing the aspartic acid content in the green coffee, it is consequently possible to reduce the acrylamide content in the roasted coffee.

### Example 4 - Enzymatic treatment of the water extract

Two water extracts, prepared as disclosed in the Example 2 and obtained from green coffee (origin: India and Ethiopia), have been treated with asparaginase (SIGMA, No. A3809, 100 units) for 30 minutes at 37°C.

On each sample, 3 quantitative determinations of the asparagine and aspartic acid amino acids have been carried out, before adding the enzyme (T0), 2 minutes from the adding of the enzyme (T2), 30 minutes from the adding of the enzyme (T2).

The qualitative determination of asparagine and aspartic acid has been carried out in GC-MS, according to the procedure disclosed in the Example 2.

The analytical results obtained are set out in the following Table C:

**Table C**

| Sample | India T0 | India T1 | India T2 | Ethiopia T0 | Ethiopia T1 | Ethiopia T2 |
|---|---|---|---|---|---|---|
| Asparagine (ppm) | 520 | 382 | <5 | 500 | 448 | <5 |
| Aspartic acid (ppm) | 670 | 672 | 1242 | 558 | 566 | 1072 |

The results of Table C attest that the asparaginase enzyme, in the aforesaid reaction conditions (37°C; 30 minutes), is able to convert the asparagine that is present in the water extract into aspartic acid, without being inhibited by the presence (in the water extract) of the other chemical components of the green coffee.

### Example 5 - Procedure for the reduction of the acrylamide content a roasted coffee

120 g of beans of green coffee *(Coffea arabica;* origin: Brazil) have been placed in contact with 750 ml of water in a lined three-neck container. The container has been maintained at a temperature of 80°C through thermostat, as well as under constant agitation through magnetic stirrer. The extraction has been conducted for 5 hours, whilst the steam that had formed was condensed by reflux into the container.

After the 5 hours had elapsed, the water extract has been recovered and subjected to the quantitative determination of asparagine and aspartic acid, according to the procedure (GC-MS) disclosed in the Example 2.

The extracted green coffee has been placed in a ventilated stove at 50°C for one night and then at 101°C until residual humidity of 20% in weight was obtained.

The water extract, having a volume equal to 600 ml, has been treated with 30 *µ*l of an enzymatic preparation of asparaginase obtained from *Aspergillus niger* (SPRIN Technologies, Cod. SBNAN), for 30 minutes at 37°C, in a stirrer provided with thermostat.

The enzymatically treated water extract has been subjected to the quantitative determination of asparagine and aspartic acid, according to the procedure (GC-MS) disclosed in the Example 2.

After the quantitative determination, the water extract has been concentrated under vacuum through rotating evaporator, at a temperature of 50°C, until a volume equal to about 100 ml was obtained.

The partially dried extracted green coffee has been immersed in the enzymatically treated water extract and concentrated, by enabling the extract to imbibe the beans for about 1 hour at ambient temperature.

Then the imbibed green coffee (namely the reincorporated green coffee) has been almost completely dried, under vacuum and through rotating evaporator, at a temperature of 50°C. Drying has been completed by treating the green coffee in a fluid bed system, so as to obtain 118 g of dry product.

100 g of the aforesaid dry product and 100 g of untreated green coffee have been roasted in a laboratory roaster, so as to obtain a same degree of roasting, with a total weight loss equal to 16%.

The treated roasted coffee and the untreated roasted coffee have been subjected to analysis, in order to verify the acrylamide concentration.

For each roasted coffee (treated; untreated), 1 g of coffee powder (ground roasted coffee) has been subjected to extraction, by using a *"QuEChERS"* kit (Agilent Technologies, USA) based on a known extraction method (Mastovska K. & Lehotay S.J. "Rapid sample preparation method for LC-MS/MS or GC-MS analysis of acrylamide in various food matrices", Journal of Agricultural and Food Chemistry, Vol. 54, 2006, pp. 7001-7008). The corresponding extract has been subjected to LC-ESI-MS-MS, by using a *"Kinetex 2.6u XB-C18 100A"* column for liquid chromatography (Phenomenex Inc. USA).

The analytical results obtained are set out in the following Table D (in which "a.u." means "arbitrary unit"):

**Table D**

| Sample | Asparagine (*µ*g/g) | Aspartic acid (*µ*g/g) | Peak area acrylamide (a.u) | Acrylamide reduction (%) |
|---|---|---|---|---|
| Untreated (1^{st} analysis) | 410 | 765 | 0.337 | 0 |
| Treated (1^{st} analysis) | <5 | 1300 | 0.124 | 63.2 |
| Untreated (2^{nd} analysis) | 410 | 765 | 0.310 | 0 |
| Treated (2^{nd} analysis) | <5 | 1300 | 0.054 | 82.5 |

The results of Table D attest that, by removing enzymatically a precursor of the acrylamide (asparagine) from a water extract of green coffee and subsequently reincorporating the enzymatically treated water extract in the same green coffee, it is possible to obtain from the latter a roasted coffee whose acrylamide content is significantly reduced.

In the subsequent Examples 6, 7, 8 procedures are disclosed for the reduction of the acrylamide content in a roasted coffee in which, unlike the procedure disclosed in the Example 5, the double enzymatic treatment according to the invention is carried out, which aims to remove two distinct precursors of acrylamide (asparagine; aspartic acid).

### Example 6 - Procedure for the reduction of the acrylamide content a roasted coffee

120 g of beans of green coffee *(Coffea arabica;* origin: Brazil) have been placed in contact with 720 ml of water in a lined three-neck container. The receptacle has been maintained at a temperature of 80°C through thermostat, as well as under constant agitation through magnetic stirrer. The extraction has been conducted for 5 hours, whilst the steam that had formed was condensed by reflux into the container.

After the 5 hours had elapsed, the water extract has been recovered and filtered on strainer.

The extracted green coffee has been placed in a ventilated stove at 101°C for 10 minutes and then dried with hot air current dryer until a residual humidity of 20% in weight was obtained (in practice, about 120 g are obtained again).

The water extract, having a volume equal to 600 ml, has been treated with 30 *µ*l of an enzymatic preparation of asparaginase obtained from *Aspergillus niger* (SPRIN Technologies, Cod. SBNAN) + 1mL of an enzymatic preparation of aspartase (SPRIN Technologies, Cod. SBANN, dissolved with a concentration of 0.1 mg/*µ*L in a pH 7 buffer solution), for 2 h at 37°C, in a stirrer provided with thermostat.

The water extract has been concentrated under vacuum through rotating evaporator, at a temperature of 65°C, until a volume of about 100 ml was obtained.

The partially dried extracted green coffee has been immersed in the enzymatically treated water extract and concentrated, by enabling the extract to imbibe the beans for about 2 h at a temperature comprised between 65°C and 75°C.

Then the imbibed green coffee (reincorporated green coffee) has been almost dried, under vacuum and through rotating evaporator, at a temperature of 65-75°C. Drying has been completed by treating the green coffee in a fluid bed system, so as to obtain 113 g of dry product.

100 g of the aforesaid dry product and 100 g of untreated green coffee have been roasted in a laboratory roaster, so as to obtain a same degree of roasting.

The treated roasted coffee and the untreated roasted coffee have been subjected to analysis, in order to verify the acrylamide concentration.

For each roasted coffee (treated; untreated), 2 g of coffee powder (ground roasted coffee) has been subjected to an extraction and purification via SPE procedure based on a known extraction method (Wenzl T., Szilagyi S., Rosen J. And Karasek L. "Validation of an analytical method to determine the content of acrylamide in roasted coffee", JRC Scientific and Technical reports, EUR 23403 - 2008, Annex 3). The corresponding extract has been subjected to LC-ESI-MS-MS, by using a *"Hypercarb 5u 100 x 2,1mm"* column for liquid chromatography (Thermo Fisher Scientific, USA).

For each sample (treated; untreated) three analyses have been carried out (Test 1; Test 2; Test 3) in LC-ESI-MS-MS. The analytical results obtained are set out in the following Table E:

**Table E**

| | Test 1 | Test 2 | Test 3 | Average value | |
|---|---|---|---|---|---|
| | Acrylamide (ng/g) | Acrylamide (ng/g) | Acrylamide (ng/g) | Acrylamide (ng/g) | Acrylamide reduction (%) |
| Untreated sample | 346 | 418 | 405 | 390 | 0 |
| Treated sample | 71 | 61 | 59 | 64 | 84 |

### Example 7 - Procedure for the reduction of the acrylamide content a roasted coffee

1000 g of beans of green coffee *(Coffea arabica;* origin: Brazil) have been placed in contact with 5 litres of water in a lined three-neck container. The container has been maintained at a temperature of 80°C through thermostat, and under constant agitation through mechanical stirrer. The extraction has been performed for 5 hours, whilst the steam that had formed was condensed by reflux into the container.

After the 5 hours had elapsed, the water extract has been recovered and filtered for removing the pellicles.

The extracted green coffee has been placed in a fluid bed system at 85°C for about 1 h, until residual humidity of about 20% in weight was obtained (in practice, about 1000 g are obtained again).

The water extract, having a volume equal to 4 litres, has been treated with 200 *µ*l of an enzymatic preparation of asparaginase obtained from *Aspergillus oryzae* (SPRIN Technologies, Cod. SBNAO) + 3.3 ml of an enzymatic preparation of aspartase (SPRIN Technologies, Cod. SBANN, dissolved with a 0.2 mg/*µ*L concentration in a pH 7 buffer solution), for 2 h at 40°C, in a stirrer provided with thermostat.

The water extract has been concentrated under vacuum through rotating evaporator, at a temperature of 85°C, until a volume equal to approximately 670 ml was obtained.

The partially dried extracted green coffee has been immersed in the enzymatically treated water extract and concentrated, by enabling the extract to imbibe the beans for about 1 h at a temperature of 80°C.

Then the imbibed green coffee (reincorporated green coffee) has been almost dried, under vacuum and through rotating evaporator, at a temperature of 80°C. Drying has been completed by treating the green coffee in a fluid bed-type system, so as to obtain 917 g of dry product.

100 g of the aforesaid dry product and 100 g of untreated green coffee have been roasted in a laboratory roaster, so as to obtain a same degree of roasting.

The treated roasted coffee and the untreated roasted coffee have been subjected to analysis, for ascertaining the concentration of acrylamide, by using the method of the Example 6. For each sample (treated; untreated) two analyses have been carried out (Test 1; Test 2) in LC-ESI-MS-MS.

The analytical results obtained are set out in the following Table F:

**Table F**

| | Test 1 | Test 2 | Average value | |
|---|---|---|---|---|
| | Acrylamide (ng/g) | Acrylamide (ng/g) | Acrylamide (ng/g) | Acrylamide reduction (%) |
| Untreated sample | 318 | 315 | 316.5 | 0 |
| Treated sample | 102 | 96 | 99 | 69 |

### Example 8 - Procedure for the reduction of the acrylamide content a roasted coffee

400 g of beans of green coffee *(Coffea arabica;* origin: Brazil) have been placed in contact with 1.2 litres of water in a lined three-neck container. The container has been maintained at a temperature of 85-87°C through thermostat, and under constant agitation through mechanical stirrer. The extraction has been performed for 5 hours, whilst the steam that had formed was condensed by reflux into the container. After the 5 hours had elapsed, the water extract was recovered and filtered for removing the pellicles.

The extracted green coffee has been placed in a fluid bed system at about 85°C for 1 h, until residual humidity of 20% in weight was obtained (in practice, about 400 g are obtained again).

The water extract, having a volume equal to 0.85 litres, has been treated with 60 *µ*l of an enzymatic preparation of asparaginase obtained from *Aspergillus oryzae* (SPRIN Technologies, Code SBNAO 3.5 U/*µ*l) + 1 ml of an enzymatic preparation of aspartase (SPRIN Technologies, Cod. SBANN, dissolved with a 0.2 mg/*µ*L concentration in a pH 7 buffer solution), for 14 h at 30-35°C, in a stirrer provided with thermostat.

The water extract has been concentrated under vacuum through rotating evaporator, at a temperature of 80°C, until a volume of about 200 ml was obtained.

The partially dried extracted green coffee has been immersed in the enzymatically treated water extract and concentrated, by enabling the extract to imbibe the beans for about 1 h at a temperature of 80°C.

Then the imbibed green coffee (reincorporated green coffee) has been almost dried, under vacuum and through rotating evaporator, at a temperature of 80°C. Drying has been completed by treating the green coffee in a fluid bed system, so as to obtain 375 g of dry product.

100 g of the aforesaid dry product and 100 g of untreated green coffee have been roasted in a laboratory roaster, so as to obtain a same degree of roasting.

The treated roasted coffee and the untreated roasted coffee have subjected to analysis, for verifying the concentration of acrylamide, by using the method of the Example 6. For each sample (treated; untreated), a single analysis in LC-ESI-MS-MS has been carried out.

The analytical results obtained are set out in the following Table G:

**Table G**

| | Acrylamide (ng/g) | Acrylamide reduction (%) |
|---|---|---|
| Untreated sample | 253 | 0 |
| Treated sample | 110 | 56.5 |

The results set out in the Tables E, F, G of the Examples 6, 7, 8 attest that, by removing enzymatically two distinct precursors of the acrylamide (asparagine; aspartic acid) from a water extract of green coffee and by subsequently reincorporating the enzymatically treated water extract in the same green coffee, it is possible to obtain from the latter a roasted coffee the acrylamide content of which is significantly reduced.

In particular, by comparing the experimental results of the Example 6 with the experimental results of the Example 5, the possibility is highlighted of obtaining a maximum percentage reduction of the acrylamide content that is greater than that which is obtainable by enzymatically removing only asparagine (84% as opposed to 82.5%).

## Claims

1. Method for reducing the acrylamide content in a roasted coffee, comprising reducing the asparagine content and reducing the aspartic acid content in an unroasted coffee, said roasted coffee being obtained from said unroasted coffee after said reducing the asparagine content and said reducing the aspartic acid content.

2. Method according to claim 1, wherein said reducing the asparagine content comprises degrading said asparagine enzymatically.

3. Method according to claim 1, or 2, wherein said reducing the aspartic acid content comprises degrading said aspartic acid enzymatically.

4. Method according to any preceding claim, comprising subjecting said unroasted coffee to an extraction in water, so as to obtain a water extract and an extracted unroasted coffee, and separating said water extract from said extracted unroasted coffee.

5. Method according to claim 4, wherein said extraction in water is carried out at a temperature comprised between 50°C and 90°C.

6. Method according to claim 4 or 5, wherein said extraction in water is carried out for a time comprised between 3 h and 12 h.

7. Method according to any one of claims 4 to 6 as appended to claim 2, wherein said degrading said asparagine enzymatically comprises treating said water extract with an enzymatic preparation comprising an asparaginase.

8. Method according to any one of claims 4 to 7 as appended to claim 3, wherein said degrading said aspartic acid enzymatically comprises treating said water extract with an enzymatic preparation comprising an aspartase.

9. Method according to claim 7, or 8, wherein said treating said water extract comprises leaving said enzymatic preparation to act at a temperature comprised between 25°C and 60°C.

10. Method according to any one of claims 7 to 9, wherein said treating said water extract comprises leaving said enzymatic preparation to act for a time comprised between 10 minutes and 120 minutes.

11. Method according to claim 7, or according to any one of claims 8 to 10 as appended to claim 7, wherein said treating said water extract comprises using a source of asparaginase activity selected from a group consisting of: enzymes in solution, immobilised enzymes, unpurified bacterial lysates, immobilised bacteria.

12. Method according to claim 8, or according to any one of claims 9 to 11 as appended to claim 8, wherein said treating said water extract comprises using a source of aspartase activity selected from a group consisting of: enzymes in solution, immobilised enzymes, unpurified bacterial lysates, immobilised bacteria.

13. Method according to claim 4, or according to any one of claims 5 to 12 as appended to claim 4, comprising decaffeinating said water extract.

14. Method according to any one of claims 7 to 13, comprising concentrating said water extract after said treating, so as to obtain a concentrated water extract.

15. Method according to claim 14, wherein said concentrating is carried out under vacuum and at a temperature comprised between 40°C and 85°C.

16. Method according to claim 14 or 15, wherein said concentrating is obtained through a procedure selected from a group consisting of: evaporation under atmospheric pressure, pervaporation, concentration by freezing, reverse osmosis and nanofiltration.

17. Method according to claim 4, or according to any one of claims 5 to 16 as appended to claim 4, comprising drying said extracted unroasted coffee.

18. Method according to claim 17, wherein said drying continues until a dried extracted unroasted coffee is obtained, having a humidity comprised between 10% in weight and 30% in weight.

19. Method according to claim 18 as appended to any one of claims 4 to 17, comprising reincorporating said concentrated water extract in said dried extracted unroasted coffee, wherein said reincorporating comprises enabling said concentrated water extract to imbibe said dried extracted unroasted coffee, until a wet reincorporated unroasted coffee is obtained.

20. Method according to claim 19, comprising drying said wet reincorporated unroasted coffee until a dry reincorporated unroasted coffee is obtained, having a residual humidity comprised between 8% in weight and 12.5% in weight.

21. Method according to claim 20, comprising toasting said unroasted coffee.

22. Method according to any preceding claim, wherein said unroasted coffee are unroasted coffee beans.

## Patentansprüche

1. Verfahren zum Reduzieren des Acrylamidgehalts in einem gerösteten Kaffee, das das Reduzieren des Asparagingehalts und Reduzieren des Asparaginsäuregehalts in einem ungerösteten Kaffee umfasst, wobei der geröstete Kaffee aus dem ungerösteten Kaffee erhalten wird, nachdem der Asparagingehalt reduziert wurde und der Asparaginsäuregehalt reduziert wurde.

2. Verfahren gemäß Anspruch 1, wobei das Reduzieren des Asparagingehalts das enzymatische Abbauen des Asparagins umfasst.

3. Verfahren gemäß Anspruch 1 oder 2, wobei das Reduzieren des Asparaginsäuregehalts das enzymatische Abbauen der Asparaginsäure umfasst.

4. Verfahren gemäß einem vorherigen Anspruch, das das Zuführen des ungerösteten Kaffees zu einer Extraktion in Wasser, um einen Wasserextrakt und einen extrahierten ungerösteten Kaffee zu erhalten, und das Trennen des Wasserextrakts von dem extrahierten ungerösteten Kaffee umfasst.

5. Verfahren gemäß Anspruch 4, wobei die Extraktion in Wasser bei einer Temperatur durchgeführt wird, die bei 50 °C bis 90 °C liegt.

6. Verfahren gemäß Anspruch 4 oder 5, wobei die Extraktion in Wasser für eine Dauer durchgeführt wird, die bei 3 Stunden bis 12 Stunden liegt.

7. Verfahren gemäß einem der Ansprüche 4 bis 6, sofern von Anspruch 2 abhängig, wobei das enzymatische Abbauen des Asparagins das Behandeln des Wasserextrakts mit einer enzymatischen Zubereitung umfasst, die Asparaginase enthält.

8. Verfahren gemäß einem der Ansprüche 4 bis 7, sofern von Anspruch 3 abhängig, wobei das enzymatische Abbauen der Asparaginsäure das Behandeln des Wasserextrakts mit einer enzymatischen Zubereitung umfasst, die eine Aspartase enthält.

9. Verfahren gemäß Anspruch 7 oder 8, wobei das Behandeln des Wasserextrakts das Belassen der enzymatischen Zubereitung umfasst, um bei einer Temperatur zu wirken, die bei 25 °C bis 60 °C liegt.

10. Verfahren gemäß einem der Ansprüche 7 bis 9, wobei das Behandeln des Wasserextrakts das Belassen der enzymatischen Präparation umfasst, um für eine Dauer zu wirken, die bei 10 Minuten bis 120 Minuten liegt.

11. Verfahren gemäß Anspruch 7 oder gemäß einem der Ansprüche 8 bis 10, sofern von Anspruch 7 abhängig, wobei das Behandeln des Wasserextrakts das Verwenden einer Quelle einer Asparaginaseaktivität umfasst, die ausgewählt ist aus einer Gruppe bestehend aus: Enzymen in Lösung, immobilisierten Enzymen, ungereinigten bakteriellen Lysaten, immobilisierten Bakterien.

12. Verfahren gemäß Anspruch 8 oder gemäß einem der Ansprüche 9 bis 11, sofern von Anspruch 8 abhängig, wobei das Behandeln des Wasserextrakts das Verwenden einer Quelle einer Aspartaseaktivität umfasst, die ausgewählt ist aus einer Gruppe bestehend aus: Enzymen in Lösung, immobilisierten Enzymen, ungereinigten bakteriellen Lysaten, immobilisierten Bakterien.

13. Verfahren gemäß Anspruch 4 oder gemäß einem der Ansprüche 5 bis 12, sofern von Anspruch 4 abhängig, dass das Entkoffeinieren des Wasserextrakts umfasst.

14. Verfahren gemäß einem der Ansprüche 7 bis 13, das das Konzentrieren des Wasserextrakts nach der Behandlung umfasst, um einen konzentrierten Wasserextrakt zu erhalten.

15. Verfahren gemäß Anspruch 14, wobei das Konzentrieren unter Vakuum und bei einer Temperatur durchgeführt wird, die bei 40 °C bis 85 °C liegt.

16. Verfahren gemäß Anspruch 14 oder 15, wobei das Konzentrieren durch ein Verfahren erhalten wird, das ausgewählt ist aus einer Gruppe bestehend aus: Evaporation unter atmosphärischem Druck, Pervaporation, Konzentration durch Gefrieren, Reversosmose und Nanofiltration.

17. Verfahren gemäß Anspruch 4 oder gemäß einem der Ansprüche 5 bis 16, sofern von Anspruch 4 abhängig, das das Trocknen des extrahierten ungerösteten Kaffees umfasst.

18. Verfahren gemäß Anspruch 17, wobei das Trocknen andauert, bis ein getrockneter extrahierter ungerösteter Kaffee erhalten wird, der eine Feuchtigkeit aufweist, die bei 10 Gew.-% bis 30 Gew.-% liegt.

19. Verfahren gemäß Anspruch 18, sofern von einem der Ansprüche 4 bis 17 abhängig, das das Wiedereinbringen des konzentrierten Wasserextrakts in den getrockneten extrahierten ungerösteten Kaffee umfasst, wobei das Wiedereinbringen umfasst, es dem konzentrierten Wasserextrakt zu ermöglichen, den getrockneten extrahierten ungerösteten Kaffee aufzusaugen, bis ein feuchter wiedereingebrachter ungerösteter Kaffee erhalten wird.

20. Verfahren gemäß Anspruch 19, das das Trocknen des feuchten wiedereingebrachten ungerösteten Kaffees umfasst, bis ein trockener wiedereingebrachter ungerösteter Kaffee erhalten wird, der eine Restfeuchte aufweist, die bei 8 Gew.-% bis 12,5 Gew.-% liegt.

21. Verfahren gemäß Anspruch 20, das das Rösten des ungerösteten Kaffees umfasst.

22. Verfahren gemäß einem vorherigen Anspruch, wobei der ungeröstete Kaffee ungeröstete Kaffeebohnen ist.

## Revendications

1. Procédé pour réduire la teneur en acrylamide dans un café torréfié, consistant à réduire la teneur en asparagine et à réduire la teneur en acide aspartique dans un café non torréfié, ledit café torréfié étant obtenu à partir dudit café non torréfié après ladite réduction de la teneur en asparagine et ladite réduction de la teneur en acide aspartique.

2. Procédé selon la revendication 1, dans lequel ladite réduction de la teneur en asparagine consiste en une dégradation enzymatique de ladite asparagine.

3. Procédé selon la revendication 1 ou 2, dans lequel ladite réduction de la teneur en acide aspartique consiste en une dégradation enzymatique dudit acide aspartique.

4. Procédé selon une quelconque revendication précédente, consistant à soumettre ledit café non torréfié à une extraction dans de l'eau, de manière à obtenir un extrait aqueux et du café non torréfié extrait, et à séparer ledit extrait aqueux dudit café non torréfié extrait.

5. Procédé selon la revendication 4, dans lequel ladite extraction dans de l'eau est mise en oeuvre à une température comprise entre 50 °C et 90 °C.

6. Procédé selon la revendication 4 ou 5, dans lequel ladite extraction dans de l'eau est mise en oeuvre pendant une durée comprise entre 3h et 12h.

7. Procédé selon l'une quelconque des revendications 4 à 6 lorsqu'elles sont dépendantes de la revendication 2, dans lequel ladite dégradation enzymatique de ladite asparagine consiste à traiter ledit extrait aqueux avec une préparation enzymatique comprenant une asparaginase.

8. Procédé selon l'une quelconque des revendications 4 à 7 lorsqu'elles sont dépendantes de la revendication 3, dans lequel ladite dégradation enzymatique dudit acide aspartique consiste à traiter ledit extrait aqueux avec une préparation enzymatique comprenant une aspartase.

9. Procédé selon la revendication 7 ou 8, dans lequel ledit traitement dudit extrait aqueux consiste à laisser ladite préparation enzymatique agir à une température comprise entre 25 °C et 60 °C.

10. Procédé selon l'une quelconque des revendications 7 à 9, dans lequel ledit traitement dudit extrait aqueux consiste à laisser ladite préparation enzymatique agir pendant une durée comprise entre 10 minutes et 120 minutes.

11. Procédé selon la revendication 7, ou selon l'une quelconque des revendications 8 à 10 lorsqu'elles sont dépendantes de la revendication 7, dans lequel ledit traitement dudit extrait aqueux consiste à utiliser une source d'activité de l'asparaginase choisie dans un groupe constitué de : enzymes en solution, enzymes immobilisées, lysats de bactéries non purifiés, bactéries immobilisées.

12. Procédé selon la revendication 8, ou selon l'une quelconque des revendications 9 à 11 lorsqu'elles sont dépendantes de la revendication 8, dans lequel ledit traitement dudit extrait aqueux consiste à utiliser une source d'activité de l'aspartase choisie dans un groupe constitué de : enzymes en solution, enzymes immobilisées, lysats de bactéries non purifiés, bactéries immobilisées.

13. Procédé selon la revendication 4, ou selon l'une quelconque des revendications 5 à 12 lorsqu'elles sont dépendantes de la revendication 4, consistant à décaféiner ledit extrait aqueux.

14. Procédé selon l'une quelconque des revendications 7 à 13, consistant à concentrer ledit extrait aqueux après ledit traitement, de manière à obtenir un extrait aqueux concentré.

15. Procédé selon la revendication 14, dans lequel ladite concentration est mise en oeuvre sous vide et à une température comprise entre 40 °C et 85 °C.

16. Procédé selon la revendication 14 ou 15, dans lequel ladite concentration est obtenue au moyen d'une procédure choisie dans un groupe constitué de : évaporation sous pression atmosphérique, pervaporation, concentration par congélation, osmose inverse et nanofiltration.

17. Procédé selon la revendication 4, ou selon l'une quelconque des revendications 5 à 16 lorsqu'elles sont dépendantes de la revendication 4, consistant à sécher ledit café non torréfié extrait.

18. Procédé selon la revendication 17, dans lequel ledit séchage continue jusqu'à ce qu'un café non torréfié extrait et séché, ayant une humidité comprise entre 10 % en poids et 30 % en poids, soit obtenu.

19. Procédé selon la revendication 18 lorsqu'elle est dépendante de l'une quelconque des revendications 4 à 17, consistant à réintroduire ledit extrait aqueux concentré dans ledit café non torréfié extrait et séché, ladite réintroduction consistant à permettre audit extrait aqueux concentré d'imbiber ledit café non torréfié extrait et séché, jusqu'à ce qu'un café non torréfié réintroduit humide soit obtenu.

20. Procédé selon la revendication 19, consistant à sécher ledit café non torréfié réintroduit humide jusqu'à ce qu'un café non torréfié réintroduit sec, ayant une humidité résiduelle comprise entre 8 % en poids et 12,5 % en poids, soit obtenu.

21. Procédé selon la revendication 20, consistant à griller ledit café non torréfié.

22. Procédé selon une quelconque revendication précédente, dans lequel ledit café non torréfié consiste en des grains de café non torréfié.
